# EUROPEAN PATENT APPLICATION

(11) **EP 2 833 561 A1**
(43) Date of publication of application: **04.02.2015**
(21) Application number: 13178995.0
(22) Date of filing: 01.08.2013
(51) Int. Cl.: H04B 7/185

(54) **A method for relaying air traffic information to an aircraft using a navigational satellite as relay.**

(71) Applicant: Thales Alenia Space Deutschland GmbH, 71254 Ditzingen (DE)
(72) Inventor: Blomenhofer, Helmut, Dr., 88690 Uhldingen (DE)
(74) Representative: DREISS Patentanwälte PartG mbB

(57) **Abstract**

The invention refers to a method for transmitting information relating to an air traffic situation. The information is collected in an Air Traffic Information Service Provision Facility (17) and transmitted to an aircraft (6). Furthermore, the invention refers to a navigational satellite (23) of a satellite navigation system. The navigational satellite (23) transmits at least one navigational signal (27) to at least one receiver. In order to provide for a feasible and cheap transmission of the air traffic situation information it is suggested that
- collecting the air traffic data received by radars (7), terrestrial ADS-B receivers (2) and/or space based ADS-B receivers (11),
- generating messages containing said information,
- uplinking said messages to at least one navigational satellite (23) of a satellite navigation system, the navigational satellite (23) transmitting at least one navigational signal (27) to at least one receiver, and
- broadcasting said information from the at least one navigational satellite (23) to the aircraft (6) using a navigational satellite signal (27).

## Description

The present invention refers to a method for transmitting information relating to an air traffic situation. Furthermore, the invention refers to a navigational satellite of a satellite navigation system. The navigational satellite transmits at least one navigational signal to at least one receiver.

In the specification the following abbreviations are used:
ADS-B = Automatic Dependent Surveillance - Broadcast
TIS-B = Traffic Information Service - Broadcast
FIS-B = Flight Information Service - Broadcast
ADS-R = Automatic Dependent Surveillance - Re-Broadcast
FMS = Flight Management System
SPS = GPS (Global Positioning System) Standard Positioning Service
PPS = GPS Precise Positioning Service

GNSS (Global Navigation Satellite System) receivers receive navigational signals from a plurality of navigational satellites. The navigational signals serve for determine the current position of the receiver. The GNSS receivers can be embodied as receivers for receiving navigational signals from one or more navigational satellites of a certain navigational system. Known navigational systems are, for example, US-originated GPS (Global Positioning System), the European Galileo, the Russian Glonass and the Chinese Compass systems. Further, the GNSS receivers can be combined GPS and Galileo receivers. It may even be possible that the GNSS receivers are embodied as so-called triple-G receivers adapted for receiving and processing navigational signals received from GPS, Galileo and Glonass navigational satellites.

GPS provides the civil and military positioning services (SPS and PPS). Galileo provides the following services:
- Open Service (OS)
- Public Regulated Service (PRS)
- Search and Rescue Service (SAR)
- Safety-of-Life (SoL) Service
- Commercial Services (CS).

The Galileo SoL service has been provided for in the Galileo standard and a frequency block has been reserved for SoL service in the navigational signal. The Galileo navigational satellites transmit no information in the corresponding SoL channel. No decision has been made so far how to utilize the data blocks of the Galileo SoL and its broadcast capacities. The same applies to Galileo CS. The CS, too, have been provided for in the Galileo standard and a respective frequency block has been reserved for CS in the navigational signal, which is broadcast by Galileo satellites, but it is currently not utilized.

Hereinafter the current status of terrestrial ADS-B for Air Traffic Surveillance (ATS) and associated Air Traffic Information Services are described. The following is an extract from the AIM Aeronautical Information Manual - Official Guide to Basic Flight Information and ATC (Air Traffic Control) Procedures, Chapter 5. Surveillance Systems:
1. ADS-B is a surveillance technology being deployed in many areas in the world. The ADS-B system is composed of aircraft avionics and a ground infrastructure. On-board avionics determine the position of the aircraft by using the GNSS and transmit (broadcast) its position along with additional information about the aircraft to ground stations for use by ATC and other ADS-B services. This information is transmitted at a rate of approximately once per second.
2. In the United States, ADS-B equipped aircraft exchange information is on one of two frequencies: 978 or 1090 MHz. The 1090 MHz frequency is associated with Mode A, C, and S transponder operations. 1090 MHz transponders with integrated ADS-B functionality extend the transponder message sets with additional ADS-B information. This additional information is known as an "extended squitter" message and referred to as 1090ES. ADS-B equipment operating on 978 MHz is known as the Universal Access Transceiver (UAT).
3. ADS B avionics can have the ability to both transmit and receive information. The transmission (broadcast) of ADS-B information from an aircraft is known as ADS-B Out. The receipt of ADS-B information by an aircraft is known as ADS-B In.
   On January 1, 2020, all aircraft operating within the airspace defined in 14 CFR part 91, § 91.225 will be required to transmit the information defined in § 91.227 using ADS-B Out avionics.
4. In general, operators flying at 18,000 feet (appr. 5,500 metres) and above will require equipment which uses 1090 ES. Those that do not fly above 18,000 feet may use either UAT or 1090ES equipment. (Refer to 14 CFR 91.225 and 91.227.) While the regulation will not require it, operators equipped with ADS-B In will realize additional benefits from ADS-B broadcast services: Traffic Information Service - Broadcast (TIS-B) (paragraph 4-5-8) and Flight Information Service - Broadcast (FIS-B) (paragraph 4-5-9).
5. TIS-B is the broadcast of ATC derived traffic information to ADS-B equipped (1090ES or UAT) aircraft from ground radio stations. The source of this traffic information is derived from ground-based air traffic surveillance radar sensors. Uplink of other, validated surveillance data (Radar) as ADS-B lookalike.
6. FIS-B is a ground broadcast service provided through the ADS-B Services network over the 978 MHz UAT data link. The FAA FIS-B system provides pilots and flight crews of properly equipped aircraft with a cockpit display of certain aviation weather and aeronautical information. The description of FIS-B can be found in AIM Chapter 4-5-9: "The weather products provided by FIS-B are for information only. Therefore, these products do not meet the safety and regulatory requirements of official weather products. The weather products displayed on FIS-B should not be used as primary weather products, i.e., aviation weather to meet operational and safety requirements. Official weather products (primary products) can be obtained from a variety of sources including ATC, FSSs, and, if applicable, AOCC VHF/HF voice, which can transmit aviation weather, NOTAMS, and other operational aeronautical information to aircraft in flight. FIS-B augments the traditional ATC/FSS/ AOCC services by providing additional information and, for some products, offers the advantage of being displayed graphically. By using FIS-B for orientation and information, the usefulness of information received from official sources may be enhanced, but the user should be alert and understand any limitations associated with individual products. FIS-B provides the initial basic products listed below at no-charge to the user. Additional products are envisioned, but may incur subscription charges to the user. FIS-B reception is line-of-sight within the service volume of the ground infrastructure."
7. ADS-R is a rebroadcast of ADS-B data: Transmission of UAT ADS-B via 1090ES and vice versa. ADS-R is a data-link translation function of the ADS-B ground system required to accommodate the two separate operating frequencies (978 MHz and 1090ES). The ADS-B system receives the ADS-B messages transmitted on one frequency and ADS-R translates and reformats the information for rebroadcast and use on the other frequency. This allows ADS-B In equipped aircraft to see nearby ADS-B Out traffic regardless of the operating link of the other aircraft. Aircraft operating on the same ADS-B frequency exchange information directly and do not require the ADS-R translation function.

ADS-B, TIS-B, FIS-B and ADS-R exist as broadcast messages on Mode-S 1090MHz and 978MHz UAT, the respective standards exist and ADS-B, TIS-B, FIS-B and ADS-R broadcast messages are in operational use by the aviation community. Above, services are mainly available to aviation users that fly over domestic airspace. Over oceanic airspace these services are only partially available to users with SatCom equipment on board the aircraft and using ADS-C. In that case the broadcast messages associated with these services are transmitted not on Mode-S 1090MHz or 978MHz UAT, but rather of a dedicated point-to-point SatCom-connection via telecommunication satellites.

Hereinafter the current status of space based ADS-B is described. As mentioned above, ATC surveillance radars and terrestrial ADS-B surveillance systems cover just about 10% of the earth surface. The rest of the world (90%) is so-called non-radar airspace. Over oceans and remote areas the installation of terrestrial systems is not feasible or is commercially unattractive. Space based ADS-B has worldwide coverage and enables ATS over oceans, poles and remote areas without terrestrial infrastructure for the purpose of ATC. The space based ADS-B is known from and described in further detail in, for example, EP 2 263 225 B1. Space based ADS-B enables global air traffic route optimizations which reduce the aircraft's fuel burn and flight time and thus save greenhouse gas.

An important advantage of the space based ADS-B technical concept is the use of existing mandatory aircraft equipment, which means:
- No change of aircraft equipment implies no aircraft re-certification cost as compared with SatCom and ADS-C installations. Additionally, SatCom is no mandatory aircraft equipment and installation costs are a major reason why only 35% of the current aircraft have installed SatCom radios,
- ADS-B standards exist, and
- ADS-B mandatory regulations are expected by 2020.

Using a combination of radar, terrestrial ADS-B and space based ADS-B the complete air traffic can be monitored and worldwide air traffic situational awareness becomes a reality. However, as of today the space based ADS-B systems under development respectively intended are "receive only" concepts, since the broadcast of ADS-B messages over satellites using the aviation bands and protocols, e.g. Mode-S 1090, Mode-S 1090ES or 978 UAT, is lacking ITU (International Telecommunication Unit) regulations and will hardly be authorized. The 1090 MHz frequency band, which is used by aeronautical sensors like radars, TCAS (Traffic Alert and Collision Avoidance System) and ADS-B, is already heavily crowded.

Therefore, presently an ADS-R, TIS-B and FIS-B etc. return or broadcast channel is not available where no terrestrial (line-of-sight) data links, e.g. VHF and/or Mode-S 1090, Mode-S 1090ES and/or 978MHz UAT data communication, is available. Nowadays, the only communication means in these areas are HF voice communication and satellite communication (SatCom) services. HF voice communication belongs to the mandatory on-board aircraft equipment. However satellite communication is not mandatory on-board aircraft. Therefore and due to the high installation and operational cost, only about 35% of commercial air transport aircraft are equipped with SatCom radios.

The present invention suggests a method for transmitting information to an aircraft, the information relating to an air traffic situation described by air traffic data, the method comprising the steps of:
- collecting the air traffic data received by radars, terrestrial ADS-B receivers and/or space based ADS-B receivers,
- generating messages containing said information,
- uplinking said messages to at least one navigational satellite of a satellite navigation system (e.g. GPS, Galileo, Glonass, Compass), the navigational satellite transmitting at least one navigational signal to at least one receiver (e.g. GNSS receiver), and
- broadcasting said information from the at least one navigational satellite to the aircraft using a navigational satellite signal.

Hence, according to the present invention, information regarding the air traffic situation is transmitted to an aircraft via navigational satellites or by means of navigational signals transmitted by these satellites. This means that certain frequency bands within these signals are used for the transmittal of the air traffic situation information. The present invention can be used for implementing a navigation satellite Air Traffic Information Services Broadcast functionality, for example a Galileo Air Traffic Information Services Broadcast functionality.

The sources of air traffic information defining the air traffic situation are air traffic data received by radars, ADS-B ground stations and also observations using space based ADS-B. Further flight information e.g. aviation weather can be added from other sources. The sources of these data typically are Air Navigation Service Providers (ANSPs) and/or satellite service providers (e.g. Aireon LLC) in the case of space based ADS-B. Thus a complete (up to worldwide) air traffic situation of airspace covered by radar and also so-called non-radar airspace with associated flight information data can be collected by a service unit that is in charge to collect the input data e.g. at Galileo Air Traffic Service Provision Facilities (SPF).

The gathered information is then forwarded to the Galileo Message Generation Facility (MGF), where the Galileo messages are generated, which include the information uplinked to the navigation satellites and broadcast to aircraft. The Galileo SPF and/or MGF build regional data segments of the Air traffic information. These regional segments are uplinked to the Galileo satellites with current position over that area and broadcast over that service region. These regions are service regions of the e.g. Galileo Air Traffic Information Service. It is expected that especially Air Navigation Service Providers of Flight Information Regions with non-radar airspace will be interested to offer air traffic situational awareness to aircraft. The provision of Air Traffic Situational Awareness increases safety and ATC efficiency.

The method according to the present invention can provide for Air Traffic Information Services to navigational satellite aviation users (e.g. on board of an aircraft), for example Galileo aviation users. Possible candidate Galileo signals for these new services are Galileo CS on L1 and E5 signals or the yet unused SoL signal bandwidth on L1 and E5. Aviation use of L2/ E6 could also be possible, although these frequency bands are not protected for GNSS use. Alternatively, the signals for these new services comprise future new signals, e.g. on additional frequency bands, like the C-band (approximately 4 to 8 GHz).

Space based ADS-B OUT Monitoring based on the reception of the Mode-S 1090MHz Extended Squitters from aircraft for the purpose of Air Traffic Surveillance is currently under development.

As part of the present invention, for aviation users and Air Traffic Management it is proposed to broadcast ADS-B, TIS-B, FIS-B, ADS-R and/or alert messages as defined in the RTCA Do 260 standards and AIM Aeronautical Information Manual - Official Guide to Basic Flight Information and ATC (Air Traffic Control) Procedures, Chapter 5. Surveillance Systems. However, instead of using Mode-S 1090MHz, 1090ES and/or UAT for the transmission of the information relating to an air traffic situation, it is proposed to use a navigational satellite signal, for example the Galileo SoL or CS, possibly with the following amendments and preferred embodiments to realize major advantages of the invention:
1. Gather radar, terrestrial ADS-B and space based ADS-B data to continuously establish and update a complete picture/ movie of the global or regional Air Traffic.
2. Establish a structure, e.g. a coordinate grid, and generate sub-regional segments of the global or regional Air Traffic data and transmitting to the aircraft only Air Traffic data regarding one or more of those subregions.
3. Establish a structure, e.g. a coordinate grid, and generate sub-regional segments of the global or regional Air Traffic data and transmitting only part of the information relating to the air traffic situation within one or more of those sub-regional segments to at least one navigational satellite (23) currently located above or close to the one or more sub-regional segments.
4. The Air Traffic data transmitted to the aircraft as the Air Traffic Information Services could combine one or more of the following:
   a. TIS-B: broadcast of ATC derived traffic information using, for example, Galileo Commercial Services to aircraft being equipped with Galileo SoL and/or Commercial Service Receivers. The source of this traffic information is derived from ground-based air traffic surveillance radar sensors. The uplink format of other, validated surveillance data (Radar) shall be ADS-B lookalike.
   b. FIS-B: a space based broadcast service provided through Galileo SoL and/or Commercial (or other) Services. Today the FIS-B system provides pilots and flight crews of properly equipped aircraft with a cockpit display of certain aviation weather and aeronautical information. Official weather products (primary products) can be obtained from a variety of sources including ATC, FSSs, and, if applicable, AOCC VHF/HF voice, which can transmit aviation weather, NOTAMS, and other operational aeronautical information to aircraft in flight. FIS-B augments the traditional ATC/FSS/ AOCC services by providing additional information and, for some products, offers the advantage of being displayed graphically. It is proposed to use Galileo Signals e.g. SoL and/or Commercial Services bandwidth as new data link to offer similar FIS-B and augmented ATC/FSS/ AOCC services.
   c. ADS-R: the re-broadcast of terrestrial ADS-B and space based ADS-B data using Galileo SoL and/or Commercial Service Signals.
5. Broadcast the Air Traffic data from navigational satellites that cover the respective regions.
6. Optimize air traffic routes for the purpose of reducing fuel burn, flight time and greenhouse gas emissions.
7. Provide situational awareness to properly equipped aircraft and their pilots, respectively.
8. Support ATC in doing aircraft route conflict detection.
9. Inform aircraft and their pilots, respectively, of potential conflicts in Air Traffic/ send alert messages if the conflict is not resolved.

The following Service features can be realized with the present invention:
- Provision of Global Air Traffic Information Services:
   o Expanding terrestrial services, which cover less than 10% of the earth surface over oceans and remote areas without terrestrial surveillance infrastructure.

- It is proposed to broadcast ADS-B, TIS-B, FIS-B and ADS-R services using navigational satellite signals, e.g. Galileo signals, in particular the Galileo SoL and/or CS or using other navigational signals and services.
- Provision of ADS-B In, TIS-B, FIS-B "look alike" protocols and messages through Galileo SoL and/or CS.
- Global Air Traffic Situational Awareness including a return channel to provide to aircraft the information assigned to surrounding aircraft.
- Optimization of air traffic routes and transmittal of the respective information to aircraft.
- Provision of alert messages to aircraft in case of Air Traffic conflicts.

Hereinafter, the possible aircraft user equipment for realizing the present invention is described in more detail. In future, the current GPS on-board aircraft receivers will probably be replaced by new GPS or more likely combined GNSS, e.g. GPS and Galileo or GPS and Galileo and Glonass, receivers. For the latter in particular Galileo can offer better performances and new services to the users.

The installed aircraft antenna for navigational signals, e.g. the GPS antenna, will be mostly compatible or upgraded to comply with future demands for combined GNSS receivers. Advantageously, in due course today's GPS L1 antennas and receivers will be replaced by combined GPS L1 and L5 antennas and respective receivers on aircraft. Therefore, installation cost should be reasonably low for the reception of the proposed air traffic information services from navigational satellites. The hardware interface between GNSS receiver and Flight Management System (FMS) usually already exists. The software can be upgraded to forward this new Galileo service (containing the information relating to an air traffic situation) to the FMS. The modifications will be kept to a minimum since the message protocols will use ADS-B, TIS-B, FIS-B look-alike formats whenever beneficial. Thus, without significant changes on the on-board aircraft equipment, the display of this new information and service at the FMS can be realized.

Since the implementation of airborne and terrestrial ADS-B is progressing well and the first space based ADS-B development is kicked-off, the development of this new navigational satellite (e.g. Galileo) Service can be started immediately.

More features and advantages of the present invention will become apparent by means of the following detailed description with reference to the figures. It is shown in the figures:
- Fig. 1: a schematic view of an ADS-B infrastructure for realizing the present invention;
- Fig. 2: an overview over the Galileo signals;
- Fig. 3: an ADS-B, TIS-B and FIS-B Broadcast Services Architecture;
- Fig. 4: a schematic view of a preferred embodiment of a navigational satellite according to the present invention; and
- Fig. 5: a flowchart of a preferred embodiment of the method according to the present invention.

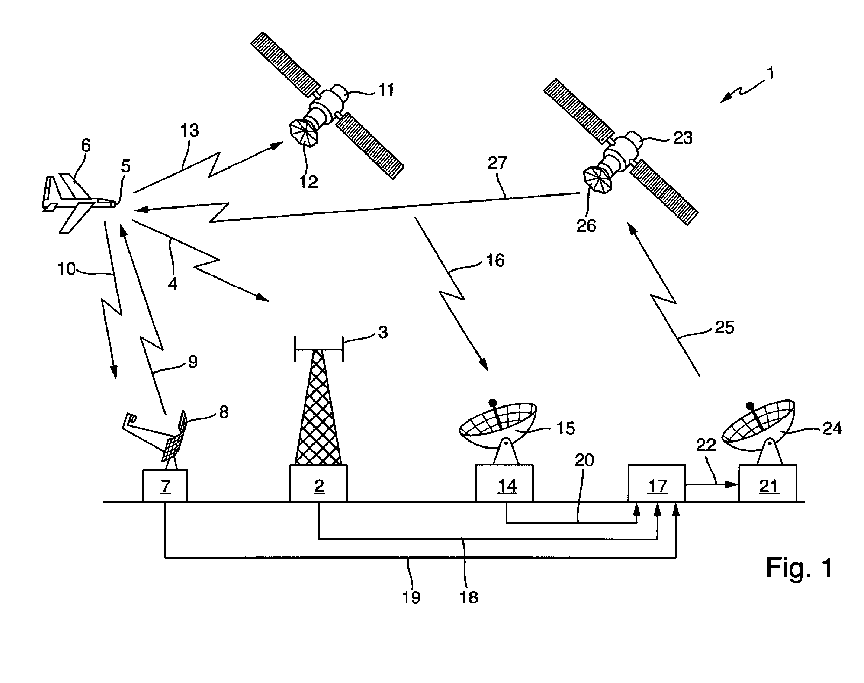

Fig. 1 shows a schematic view of an exemplary ADS-B infrastructure 1 for realizing the present invention. The infrastructure 1 may comprise one or more ground based (terrestrial) ADS-B receiving stations 2 with their respective antenna 3. Fig. 1 only shows one such ADS-B receiving station 2, but the infrastructure 1 can of course comprise more than one ADS-B receiving station. The terrestrial ADS-B receiving station 2 is adapted to receive and process any type of ADS-B signal 4, for example Mode-S 1090 MHz, Mode-S 1090 Squitter, Mode-S 1090 Extended Squitter, or UAT. Advantageously, in the embodiment of Fig. 1, the ADS-B signal 4 is a Mode-S 1090 ES signal. The ADS-B signal 4 is transmitted by a respective transmission station (e.g. Mode-S 1090ES transponder) 5 located on board of an aircraft 6 of any type. In particular, the aircraft 6 can be a commercial or a military aircraft. The ADS-B signal 4 can be regularly transmitted on the transmission station's own initiative (e.g. Mode-S 1090 Squitter or Mode-S 1090 ES).

Further, the infrastructure 1 comprises one or more secondary radar stations 7 with their corresponding radar antenna 8. For example, the radar station 7 emits a 1030 MHz request signal 9, which is received by appropriate receiving means on-board the aircraft 6 and which causes the Mode-S transponder 5 to emit a Mode-S 1090 MHz reply signal 10. The reply signal 10 is received by the antenna 8 and forwarded to and processed by the radar station 7.

Furthermore, the infrastructure 1 comprises at least one satellite or space based ADS-B receiving station 11 with its corresponding antenna 12. The satellite based ADS-B receiving station 11 is adapted to receive any type of ADS-B signal 13, for example Mode-S 1090 Extended Squitter, or UAT. Advantageously, in the embodiment of Fig. 1 the ADS-B signal 13 is a 1090 ES signal. Preferably, the ADS-B signal 13 has the same format as the ADS-B signal 4 received by the terrestrial receiving station(s) 2. To this end, the ADS-B signal 4, 13 can be identical signals transmitted by the on-board ADS-B transmitting station 5. Preferably, the signals 4, 13 are broadcast by the transmitting station 5, in order to allow every terrestrial or space based receiving station 2, 11 within reach of the ADS-B signal(s) 4, 13, to receive the signals. The ADS-B signal 13 received by the space based ADS-B receiver 11 or at least part of its content is forwarded to a satellite ground station 14 with its corresponding antenna 15 (see signal 16). Transmission of the signal 16 can be effected in any desired and adapted format.

The signals 4, 10, 16 received by the various receiving stations 2, 7, 14, in particular the payload (air traffic data) of the signals 4, 10, 13, are transmitted to an Air Traffic Information Service Provision Facility (ATI-SPF) 17 by means of terrestrial connections 18, 19, 20 of any type. In particular, the connections 18 to 20 can be realized by means of cables or as wireless connections, for example by means of radio connections. The Air Traffic Information Service Provision Facility 17 receives all the ADS-B signals 4, 10, 13 or their content respectively, processes these and determines a current air traffic situation of most if not all aircraft 6 currently within the monitored region. The Air Traffic Situation can comprise a complete picture/ movie of the global or regional air traffic.

Advantageously, information relating to the current air traffic situation, comprises at least one of ADS-B, TIS-B, FIS-B, ADS-R services and alert messages in case of an imminent air traffic conflict between two or more aircraft. TIS-B is the broadcast of ATC derived traffic information to aircraft 6. TIS-B is intended to provide aircraft 6 with a more complete traffic picture in situations where not all nearby aircraft are equipped with ADS-B. This advisory-only application can enhance the pilot's visual acquisition of other traffic. FIS-B is the broadcast of aviation weather and other flight information. FIS-B allows the pilot to passively collect and display aviation weather and other flight information.

A Message Generation Facility (MGF) creates messages containing the air traffic situation information, which are then uplinked to the navigational satellite 23. Then, the air traffic situation information is transmitted to the aircraft 6 and possibly to other aircraft, too. To this end, the invention suggests that the information relating to the air traffic situation is transmitted to a satellite ground station 21 by means of a terrestrial connection 22 of any type. In particular, the connection 22 can be realized by means of a cable or as a wireless connection, for example by means of a radio connection. The satellite ground station 21 comprises the MGF, generates the messages containing the air traffic situation information, which are transmitted (uplinked) to at least one navigational satellite 23 via its antenna 24 (see signal 25). The messages have a format compatible with the navigational satellite services and their signal formats, respectively. In particular, it is suggested that the messages are fit into the format of Galileo Services and of their signal formats, respectively. Alternatively, the MGF makes part of the Air Traffic Information Service Provision Facility 17, and the generated messages containing the air traffic situation information are transmitted across the connection 22 to the satellite ground station 21. Preferably, transmission of signal 25 is performed via a radio link in any desired format. Preferably, the ground station 21 is a navigational satellite ground station, in particular part of a ground mission and control segment of the satellite system. However, it is understood that it would also be possible to use the satellite ground station 14 with its corresponding antenna 15 for this purpose instead of the separate satellite ground station 21 and its antenna 24. In that case the antenna 15 would be adapted for receiving the ADS-B signal 16 and for transmitting the signal 25 in the desired format carrying the air traffic situation information to the navigational satellite 23.

The navigational satellite 23 can be part of any type of satellite navigation system. In particular, the navigational satellite 23 can be part of a Galileo, a GPS, a Glonass or a Compass navigation system. According to a preferred embodiment of the invention, the satellite 23 is a Galileo satellite making part of a Galileo satellite system. The navigational satellite 23 broadcasts navigational satellite signals 27, which are received by GNSS receivers and used to determine the receiver's current position. The navigational satellite 23 forwards the information signal 25 or the information contained therein to the aircraft 6 using the satellite's antenna 26 by means of the navigational satellite signal 27 or by means of a frequency band or channel within that navigational signal 27, respectively. Of course, the broadcast signal 27 can be received by other aircraft within reach of the navigational signal 27, too. Preferably, the air traffic situation information is transmitted using Galileo Commercial Services (CS) or Galileo SoL-Services.

The navigational signal 27 is received by a GNSS receiver (not shown) on-board the aircraft 6. The GNSS receiver forwards the received signal 27 to processing means on-board the aircraft 6. The processing means process the signal 27 and, in particular, extract the air traffic situation information contained therein. Based on the air traffic situation information a picture or movie of the current global or regional air traffic situation in the monitored region can be displayed to the pilot on a screen, e.g. a flat panel display, in the cockpit or can be presented to the pilot in any other way, e.g. acoustically. TIS-B products are preferably displayed graphically to the pilot. FIS-B products may be graphically or textually depicted. In addition to textual aviation weather products such as aviation routine weather report (METAR), aviation special selected weather reports (SPECI), and terminal aerodrome forecasts (TAF), graphical weather products such as radar composite/ mosaic images, temporary flight restricted airspace, and other notices to airmen (NOTAM) may be provided to the cockpit. Alert messages may be provided to the pilot textually (e.g. by means of a warning message on a display) or graphically (e.g. by lighting a warning lamp or by graphically displaying a certain symbol on a display) and/or acoustically (e.g. by sounding an audio warning).

An important aspect of the present invention is the fact that information relating to a current air traffic situation is not transmitted to the aircraft 6 by means of conventional ADS-B signals (e.g. Mode-S 1090, Mode-S 1090 Squitter, Mode-S 1090ES or UAT), but rather by means of navigational satellite signals, in particular within a free frequency band or channel within the navigational signals, which is not used for the transmission of other information. Currently, the CS channel and the channel for SoL-Services are unused in Galileo navigational satellite signals and, therefore, are particularly adapted for transmitting the air traffic situation information to the aircraft 6.

The air traffic data received from the receivers 2, 7, 12 are divided into regional segments. This is performed by the Air Traffic Information Service Provision Facility 17. A satellite 23 orbiting above the Northern Atlantic will broadcast said air traffic situation information making part of the respective regional segment, that is of the Northern Atlantic. In contrast, a satellite 23 orbiting above the Southern Pacific will broadcast said air traffic situation information making part of another regional segment, that is of the Southern Pacific. Due to the fact that the satellites 23 orbit around the Earth, therefore the allocation of the satellites 23 to certain regional segments varies continuously. This means that different air traffic situation information relating to a certain regional segment has to be uplinked to different satellites 23 depending on which satellite 23 is currently above the respective regional segment. Preferably, the satellites broadcast air traffic situation information only for that regional segment where they are currently located above or near to.

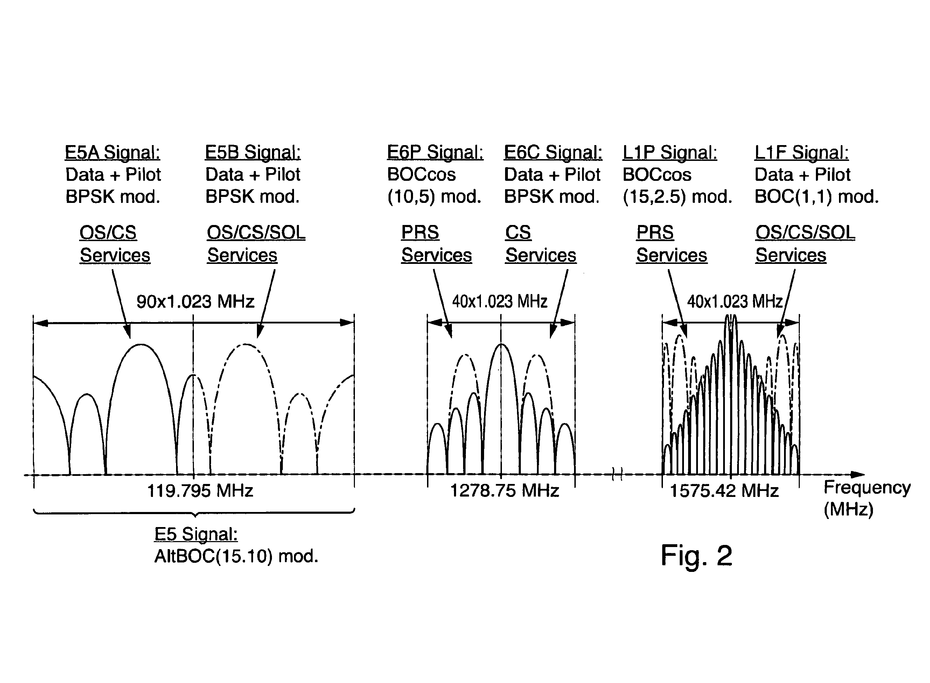

Fig. 2 shows an overview of the Galileo signals as proposed by the ESA (European Space Association) and in particular the respective frequency bands. The E5-signal is transmitted in a frequency band, the center of which is located at 1191.795 MHz. The E5-signal is used for transmittal of the Galileo OS, CS and SoL-services. In particular, a binary offset chip (BOC) procedure is used locating the maximum of the E5A and E5B signals to both sides of the frequency center, the E5A signal being used for transmission of the OS and CS, and the E5B signal being used for transmission of the OS, CS and SoL services. Similarly, the E6 signal is transmitted in a frequency band, the center of which is located at 1278.75 MHz. The E6-signal is used for transmittal of the Galileo PRS and CS. In particular, the CS is transmitted at a maximum of the E6 signal located at the frequency center, and a binary offset chip (BOC) procedure is used locating the maximum of the E6P and E6C signals to both sides of the frequency center, the E6P signal being used for transmission of the PRS. Further, the L1 signal is transmitted in a frequency band, the center of which is located at 1575.42 MHz. The L1-signal is used for transmittal of the Galileo PRS, OS, CS and SoL services. In particular, a binary offset chip (BOC) procedure is used locating the maximum of the L1P and L1F signals to both sides of the frequency center, the L1P signal being used for transmission of the PRS, and the L1F signal being used for transmission of the OS, CS and SoL services.

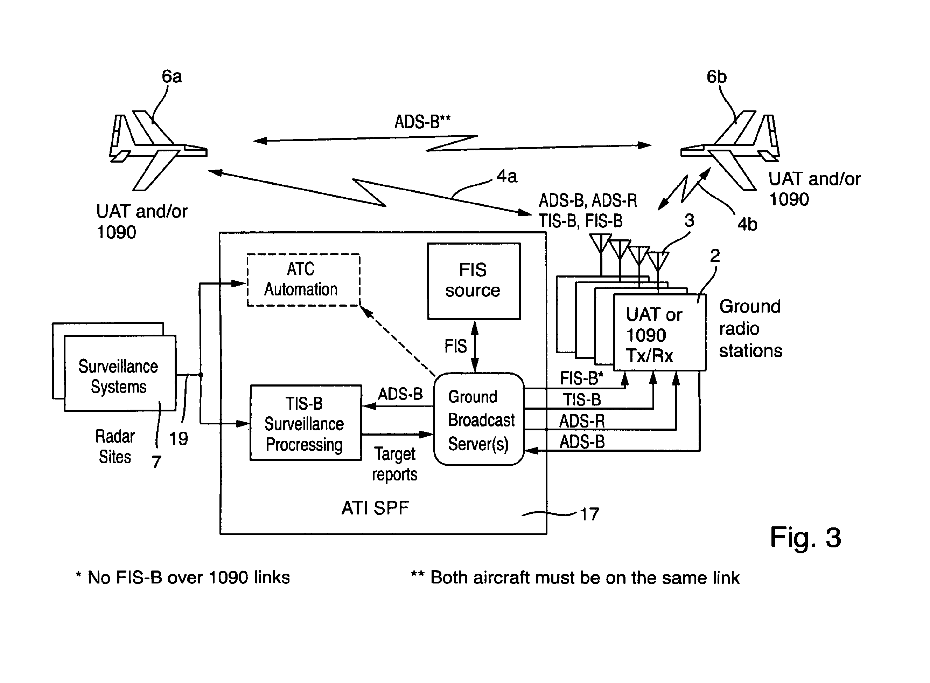

Fig. 3 shows an example for a known ADS-B, TIS-B and FIS-B broadcast architecture as suggested by AIM Aeronautical Information Manual - Official Guide to Basic Flight Information and ATC Procedures. Where possible, the same references signs as in Fig. 1 have been used. The ground based radio stations 2 are transceivers adapted for receiving ADS-B signals 4a, 4b from aircraft 6a, 6b and for transmitting (e.g. broadcasting) FIS-B, TIS-B and ADS-R signals. Due to the fact that the radio stations 2 are ground based they are allowed to transmit FIS-B, TIS-B and ADS-R signals on the Mode-S 1090 MHz frequency band. A disadvantage of the known architecture with terrestrial radio stations 2 is its limitation to a line-of-sight coverage of, for example, 55 NM (nautical miles). In particular, the FIS-B, TIS-B and ADS-R signals cannot be received over oceans, poles and remote areas without terrestrial infrastructure. However, it is not feasible or not possible to install and operate ground based radio stations 2 in these remote areas.

The Air Traffic Information Service Provision Facility 17 is provided with various control facilities. It has FIS sources for providing FIS information to Ground Broadcast Servers and a TIS-B Surveillance Processing unit, which receives ADS-B information from the Ground Broadcast Servers and provides the Ground Broadcast Servers with target reports. Further, it may have an ATC (Air Traffic Control) Automation unit for evaluation of ADS-B signals 4a, 4b and radar signals 10 received from radar sites 7 and based on these signals for determining a current air traffic situation.

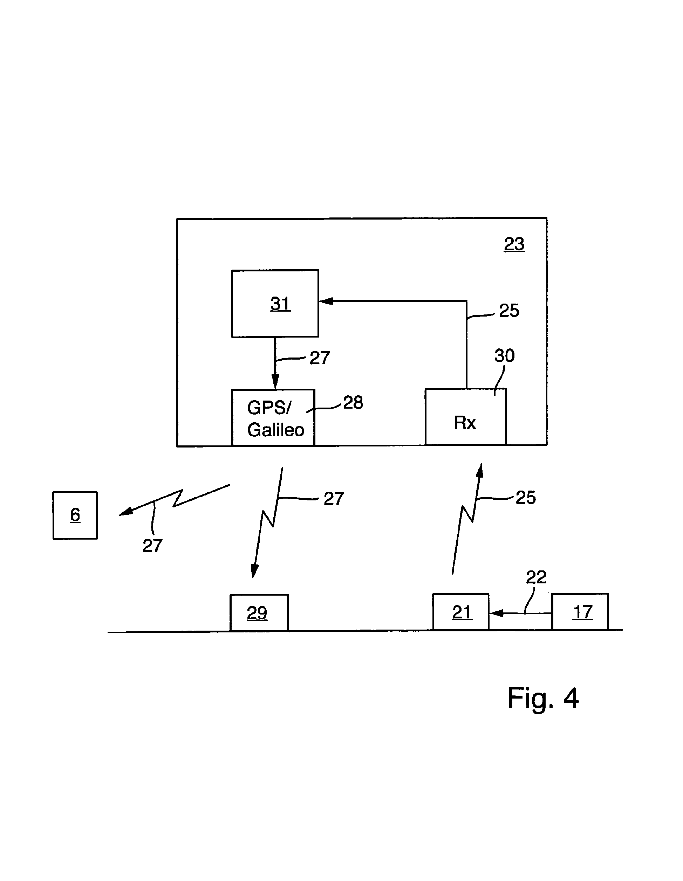

Fig. 4 shows an example of a navigational satellite 23 according to the present invention. Preferably, the satellite 23 is a Galileo satellite. Of course, the satellite 23 could also be a satellite of a GPS, Glonass and/or Compass navigational system. The navigational satellite 23 has means 28 for transmitting navigational satellite signals 27 to adapted GNSS receivers 29, 6. The navigational signals 27 are preferably broadcast regularly. All GNSS receivers 29, 6 located within reach of the navigational signals 27 and possibly in a line-of-sight to the transmitter 28 can receive the navigational signals 27. The GNSS receivers can be part of a ground based vehicle 29, for example any type of motor vehicle, or they can be assigned to a pedestrian. Alternatively, the GNSS receivers can be part of an airborne vehicle, for example any type of aircraft 6.

Furthermore, the navigational satellite 23 has receiving means 30 for receiving the signal 25 with the messages carrying the air traffic situation information from the Air Traffic Information Service Provision Facility 17. The receiving means 30 forward the signal 25 or at least the air traffic situation information contained therein to a signal generation means 31 which inserts the information into the navigational signal 27. The signal generation means 31 may process the received information, for example in order to bring the information into a desired format, before inserting the information into the navigational signal 27. Preferably, the information is brought into a format according to ADS-B In, TIS-B, and/or FIS-B "look alike" protocols. This means that the message format and the protocols used for the transmission of the information in the navigational signal 27 is very similar, if not identical to the conventional ADS-B In, TIS-B, and/or FIS-B formats.

Preferably, the signal generation means 31 extract the information relating to the air traffic situation from the signal 25 and insert that information into a frequency band or channel of the navigational satellite signal 27, in which the information is transmitted to the aircraft 6. Preferably, the signal generation means 31 insert the air traffic situation information into a frequency band or channel which at least temporarily is not used for transmitting other information or data. In an exemplary Galileo navigational system, such frequency bands or channels are, for example, the CS-channel or the channel provided for SoL-services.

This allows the GNSS receivers located in the aircraft 6 to receive the air traffic situation information with the navigational signal 27 transmitted by the navigational satellite 23. The information can be extracted from the signal 27 and further processed and/or presented to the pilot of the aircraft 6.

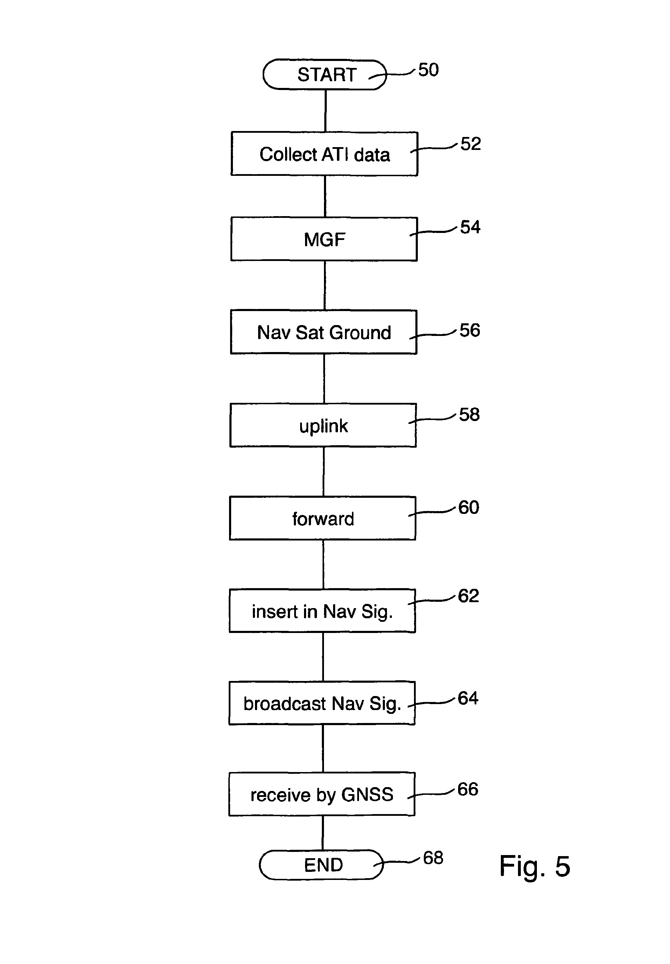

Fig. 5 shows an exemplary embodiment of the method for transmitting information to an aircraft 6, the information relating to an air traffic situation, according to the present invention. The method starts in functional block 50. First, in functional block 52 the air traffic data is collected by the Air Traffic Information Service Provision Facility (ATI-SPF) 17. The air traffic data is provided to the ATI-SPF 17 by radars 7, ADS-B ground stations 2 and also by space based ADS-B receivers 11. The observation and consideration of air traffic data provided by space based ADS-B receivers 11 provides for a possible global coverage of the air traffic situation. Further flight information, e.g. aviation weather, can be added from other sources. The sources of these data typically are Air Navigation Service Providers (ANSPs) and/or satellite service providers (e.g. Aireon LLC) in the case of space based ADS-B. In the exemplary case of a Galileo navigational system, the ATI-SPF 17 can also be designated as GalAirTIS-SPF (Galileo Air Traffic Service Provision Facility). The ATI-SPF 17 determines the current air traffic situation from the received air traffic data.

Then, in functional block 54 the gathered information relating to the current air traffic situation is forwarded to a message generation facility (MGF) which generates messages containing the air traffic situation information. The messages have the desired format of the respective navigational satellite system. For example, in a Galileo system, the messages are brought into a format of Galileo Services and fitted into their respective signal formats. It is also possible that the messages are encrypted at the MGF. The MGF can be part of the ATI-SPF 17.

Thereafter, in functional block 56 the messages generated by the MGF are forwarded to the navigational satellite ground station 21, which provides for the uplink of the messages to the at least one navigational satellite 23 of the satellite navigation system (e.g. Galileo, GPS, Glonass, Compass). The uplink signal is designated with reference sign 25 in Fig. 1. In functional block 58 the signal 25 is received by the receiving means 30 at the at least one satellite 23. The signal 25 or at least part of its content is forwarded to the signal generation means 31 of the navigational satellite 23 in functional block 60. In functional block 62 the signal 25 or its content is processed in the signal generation means 31 and the information regarding the current air traffic situation is inserted into the navigational satellite signal 27 in the manner described above. In particular, the information is transmitted in the signal 27 in a ADS-B In, TIS-B, FIS-B "look alike" format. Furthermore, it is preferred that the information is inserted into a CS-channel and/or a SoL-channel of the navigational signal 27. To this end the processing step 62 may comprise the step of bringing the air traffic situation information into the desired format.

Then, in functional block 64 the navigational signals 27 of at least one navigational satellite 23 are transmitted to the GNSS receivers within range. Preferably, the signal 27 is broadcast to the GNSS receivers. The air traffic situation information is contained in the navigational signals 27 and is transmitted together with the signal 27. In functional block 66 the signal 27 is received by the GNSS receivers, among others by the GNSS receiver of the aircraft 6. The air traffic situation information is extracted from the received signal 27. If the messages have previously been encrypted in step 54, in functional block 64 they will be decrypted in the aircraft 6, in particular in the GNSS receiver.

The air traffic situation information can be provided to the respective operating units in the aircraft 6 for further processing and/or presentation to the pilot. In particular, the received information messages include the air traffic situation and further information. It can be displayed on a screen of a navigation device together with the aircraft's own position and route. Thus, the aircraft's own position relative to the surrounding aircraft is displayed. Alternatively, the received information can be forwarded to a Flight Management System (FMS) and displayed at the FMS together with the ADS-B IN data and other available information. Finally, in functional block 68 the method is ended.

Summing up, the present invention combines air traffic data from ground based ADS-B receiving stations 2, ground based radars 7 and satellite based ADS-B receivers 11 in order to provide for a truly global air traffic situation and to continuously establish a complete picture/ movie of the global air traffic situation. At least part of this information regarding the global air traffic situation can be transmitted to the aircraft 6 providing for an air traffic situation awareness even in remote regions (e.g. over oceans, deserts or poles), where no terrestrial ADS-B coverage is realized.

In particular, the invention can provide for Air Traffic Service Broadcast in form of ADS-B, ADS-B IN, TIS-B, FIS-B look-alike protocols (Ref. AIM and RTCA Do-260) over Galileo Commercial Services or SoL-Services as data link instead of 1090ES or UAT. Further, the invention can provide for space based Traffic Information Service Broadcast (TIS-B) using Galileo Commercial Services or SoL-Services as data link instead of 1090ES or UAT for the broadcast of radar data. TIS-B is known for the broadcast of ATC derived traffic information to ADS-B equipped (1090ES or UAT) aircraft from ground radio stations. The source of this traffic information is derived from ground-based air traffic surveillance radar sensors. According to the invention uplink of other, validated surveillance data (e.g. Radar) as ADS-B lookalike is possible, too. Furthermore, the invention can be used for providing space based Flight Information Service Broadcast (FIS-B) using Galileo signals/ Commercial Services and/or SoL-Services as data link instead of 1090ES or UAT, e.g. Weather. FIS-B is known as a ground broadcast service provided through the ADS-B Services network over the 978 MHz UAT data link. The FAA (Federal Aviation Administration) FIS-B system provides pilots and flight crews of properly equipped aircraft with a cockpit display of certain aviation weather and aeronautical information. The Galileo Air Traffic Information Service/ FIS-B Service, which can be realized with the present invention, augments the traditional ATC (Air Traffic Control)/ FSS (Flight Service Station)/ AOCC (Airport Operation Control Center) services by providing additional information and, for some products, offers the advantage of being displayed graphically. It is proposed to use Galileo Signals e.g. Commercial Services or SoL-Services bandwidth as new data link to offer similar FIS-B and augmented ATC/ FSS/ AOCC services. Finally, the invention can provide space based ADS-B Rebroadcast (ADS-R) using Galileo Commercial Services or SoL-Services as data link instead of 1090ES or UAT for the re-broadcast of terrestrial and/ or space based ADS-B data.

The Galileo Air Traffic Information Services according to the present invention can combine:
- TIS-B: broadcast of ATC derived traffic information using, for example, Galileo Commercial Services or SoL-Services to aircraft 6 being equipped with Galileo Commercial Services or SoL-Services receivers,
- FIS-B: a space based broadcast service provided through Galileo Commercial Services or SoL-Services. The FIS-B system provides pilots and flight crews of accordingly equipped aircraft 6 with a cockpit display of certain aviation weather and aeronautical information, and
- ADS-R: the re-broadcast of terrestrial ADS-B and space based ADS-B data using Galileo Commercial Services or SoL-Services signals.

With the present invention the following goals can be achieved:
- Optimize air traffic route for the purpose of reducing fuel burn, flight time and greenhouse gas emissions,
- Provide situational awareness to properly equipped aircraft/ pilots,
- Support ATC in performing aircraft route conflict detection, and
- Inform aircraft of potential conflicts/ send alert messages if the conflict is not resolved.

## Claims

1. Method for transmitting information to an aircraft (6), the information relating to an air traffic situation described by air traffic data, the method comprising the steps of:
- collecting the air traffic data received by radars (7), terrestrial ADS-B receivers (2) and/or space based ADS-B receivers (11),
- generating messages containing said information,
- uplinking said messages to at least one navigational satellite (23) of a satellite navigation system, the navigational satellite (23) transmitting at least one navigational signal (27) to at least one receiver, and
- broadcasting said information from the at least one navigational satellite (23) to the aircraft (6) using a navigational satellite signal (27).

2. Method according to claim 1, wherein said information is transmitted to the aircraft (6) via at least one navigational satellite (23) of a Global Positioning System, a Glonass or a Compass satellite navigation system or satellite based augmentation system (EGNOS).

3. Method according to claim 1, wherein said information is transmitted to the aircraft (6) via at least one navigational satellite (23) of a Galileo satellite navigation system and/ or a satellite based augmentation system (EGNOS).

4. Method according to claim 3, wherein said information is broadcast from the at least one navigational satellite (23) to the aircraft (6) using a navigational satellite signal (27) transmitted via a Galileo Commercial Services or a Galileo Safety-of-Life Service channel.

5. Method according to claim 4, wherein said information is transmitted from the at least one navigational satellite (23) to the aircraft (6) on at least one of L1 and E5 signals.

6. Method according to one of the claims 1 to 5, wherein a data compression algorithm is applied to said information before at least one of generating said messages and uplinking said messages to the at least one navigational satellite (23) and broadcasting said information from the at least one navigational satellite (23) to the aircraft (6).

7. Method according to one of the claims 1 to 6, wherein the region within which the overall air traffic situation is determined is divided into a plurality of sub-regional segments and only part of the information relating to the air traffic situation within one or more of those sub-regional segments is transmitted to at least one navigational satellite (23) currently located above or close to the one or more sub-regional segments.

8. Method according to one of the claims 1 to 7, wherein the region within which the overall air traffic situation is determined is divided into a plurality of sub-regional segments and only part of the information relating to the air traffic situation within one or more of those sub-regional segments, in or near which the aircraft (6) is currently located, is transmitted from the at least one navigational satellite (23) to the aircraft (6).

9. Method according to one of the claims 1 to 8, wherein said information to be transmitted comprises at least one of ADS-B, TIS-B, FIS-B, ADS-R services and alert messages in case of an air traffic conflict between two or more aircraft.

10. Method according to one of the claims 1 to 9, wherein the messages are encrypted before uplinking them to the at least one navigational satellite (23).

11. Method according to claim 10, wherein the messages received by the at least one aircraft (6) are decrypted after receipt of the messages.

12. Navigational satellite (23) of a satellite navigation system, the navigational satellite (23) transmitting at least one navigational signal (27) to at least one receiver, **characterized in that** the satellite (23) comprises
- receiving means (31) for receiving information relating to an air traffic situation from an Air Traffic Information Service Provision Facility (17) and
- transmitting means (28) for transmitting said information from the navigational satellite (23) to the aircraft (6) using a navigational satellite signal (27).

13. Navigational satellite (23) according to claim 11,
wherein the satellite (23) comprises means for executing the method according to one of the claims 2 to 11.
